# EUROPEAN PATENT SPECIFICATION

(11) **EP 3 946 989 B1**
(45) Date of publication and mention of the grant of the patent: **27.09.2023**
(21) Application number: 20718226.2
(22) Date of filing: 01.04.2020
(51) Int. Cl.: B60G 15/06, B60G 17/015, B60G 17/02

(54) **LENGTH ADJUSTMENT DEVICE**
LÄNGENANPASSUNGSVORRICHTUNG
DISPOSITIF DE RÉGLAGE DE LONGUEUR

(30) Priority: 02.04.2019 GB 201904585
(43) Date of publication of application: 09.02.2022
(73) Proprietor: R53 Engineering Limited, Warwick, Warwickshire CV34 6LX (GB)
(72) Inventor: ESTRADA, Roger, Warwick Warwickshire CV34 6LX (GB)
(74) Representative: Bazant-Hegemark, Florian
(86) International application number: PCT/EP2020/059286
(87) International publication number: WO 2020/201371

(56) References cited:
- EP-A2- 2 236 324
- JP-A- 2000 199 507
- US-A1- 2004 195 745
- US-B1- 6 579 025
- US-B1- 7 547 028

## Description

This invention relates to a length adjustment device for adjusting the length of a component with which it is associated. By way of example, the length adjustment device may be incorporated or integrated into the component to form an integral part thereof, or it may be attached to, for example, an end thereof.

There are a number of applications in which it is desired to be able to adjust the length of a component. By way of example, in the automotive industry, where dampers are used as part of a vehicles suspension system, it is desirable in such circumstances to be able to adjust the rest length of the damper in order to be able to increase or decrease the ride height of the vehicle.

A number of dampers for use in vehicle suspension applications are known which permit adjustment of the rest length thereof, to permit ride height adjustment, but in such dampers such adjustment typically results in the maximum permitted travel of the damper in either the extending or retracting direction to be restricted, and this is undesirable.

EP2236324, which discloses the preamble of claim 1, describes a height adjustment device for wheel suspensions in motor vehicles. The actuator includes a height-adjustment drive section. This provides positive drive in conjunction with both an adjustment section associated with the vehicle structure or with the wheel suspension component, and also with a second adjustment section associated with the suspension spring seat. This allows relative height adjustment between the drive section and each of the two sections. The drive section includes two rotary threads operating with the adjustment sections. The threads have opposite senses.

US7547028 describes a steering linkage assembly adapted to steer a pair of wheels of a motor vehicle. The motor vehicle steering linkage assembly comprising a first tie rod element having a first end operatively connected to a first wheel of the vehicle and a second end. A second tie rod element has a first end operatively connected to a second wheel of the vehicle and a second end. A tubular portion extends between the first and second tie rod elements, and has a first end that is operatively connected to the second end of the first tie rod element. A second end is operatively connected to the second end of the second tie rod element. The first end of the tubular portion defines a first end centerline and the second end of the tubular portion defines a second end centerline. The tubular portion includes a contoured section preferably adjacent to the tubular portion second end. The contoured section includes a section which defines a third centerline which is offset relative to the first and second centerlines and substantially parallel relative thereto.

JP2000199507 describes a turn buckle joint and tie rod using the turn buckle joint. The objective is to reduce the number of part items of a turn buckle mechanism and man hours for assembling it in relation to a turn buckle and a tie rod using a turn buckle joint. A turn buckle joint comprises male screws and a female screw, which are different in their respective advancing directions, formed in an external peripheral surface excluding the head section of a cylindrical base material having the head section for gripping at one end and an internal peripheral surface including the head section. A plurality of slits are axially formed in equally spaced relation in an internal cylindrical surface excluding the head section. A tie rod body section and a tie rod end constituting a tie rod connecting a steering shaft and wheels are integrally connected to each other through each screw connection of a turn buckle joint. In the tie rod body section in a screw connection, a plurality of slits are axially formed in equally spaced relation in a peripheral direction, and a lock plate for simultaneously locking each screw section is applied to the external periphery of the tie rod body section.

US6579025 describes a steering tie rod for motor vehicles with a pipe, which is provided with an internal thread in a first direction of rotation on at least one side and is slotted at least in some areas, into which an adjusting sleeve is screwed at its end, where a ball-and-socket joint housing shaft of a ball-and-socket joint present at the end of the steering tie rod is screwed into the internal thread of the adjusting sleeve, which latter internal thread has a second direction of rotation opposite the first direction of rotation. An axial adjusting movement of the pipe relative to the ball-and-socket joint is made possible by a wrench contact surface made in one piece with the adjusting sleeve. The adjusting sleeve has at least one recessed slot and a collar band, which is fixed on the outer jacket surface of the pipe and fixes the components in their position in relation to one another.

US2004195745 describes a vehicle suspension system comprising a damper having a lower mount end and an upper mount end and a spring having a lower end and an upper end positioned around the damper. The spring and the damper have a common central axis. An adjustment assembly is operably attached at the lower mount end of the damper and the lower end of the spring is operably attached to and supported by the adjustment assembly thereby allowing the position of the lower end of the spring to continuously vary along the central axis of the damper. The method comprises supporting a lower end of a spring positioned around a damper and moving the end of the spring for adjusting vehicle ride height.

Whilst the description herein relates primarily to automotive applications, it will be appreciated that the invention is not restricted in this regard and may be employed in a range of other applications. By way of example, the invention may be used to adjust a rest length of an actuator used in, for example, aerospace applications or in a wide range of other applications.

It is an object of the invention to provide a length adjustment device whereby at least some of the disadvantages associated with known arrangements may be overcome or of reduced impact.

According to the present invention there is provided a length adjustment device as claimed in claim 1.

It will be appreciated that, in use, rotation of the drive member causes axial movement of the first adjustment member in one direction and axial movement of the second adjustment member in an opposite direction, thereby causing extension or retraction of the length adjustment device. A relatively great level of extension or retraction can be achieved using a device of relatively small dimensions. The device can continue to bear loads whilst length adjustment is being undertaken.

The first adjustment device may incorporate mounting means to allow it to be connected to another device, and the second adjustment device may form part of a damper or actuator housing, for example comprising a damper body. It will be appreciated that the length adjustment device may thus allow the rest length of the damper or actuator with which it is used to be adjusted without impacting upon the normal operation of the damper or actuator. By way of example, where used with a damper, the maximum travel of the damper in the extending or retracting direction is not impacted by adjustment of the rest length thereof. Whilst the second adjustment device may form part of a damper or actuator housing as mentioned above, it will be appreciated that this need not always be the case and that the invention may be used in other arrangements and applications. By way of example, the second adjustment device could be attached to or form part of a shaft of a damper or actuator.

According to the invention, the length adjustment device comprises a housing within which the drive member is located and supported for rotation, at least the first adjustment member preferably being keyed to the housing to resist rotation of the first adjustment member relative thereto. The second adjustment member may be keyed or otherwise connected to the housing to avoid or restrict relative rotation therebetween.

The drive arrangement preferably comprises a drive gear arranged to cooperate with a thread formation provided on the drive member. The drive gear is preferably rotatable about an axis substantially perpendicular to the axis of rotation of the drive member. The drive gear conveniently takes the form of a worm gear. Such an arrangement is advantageous in that unauthorised adjustment of the adjustment device is restricted. In particular, the drive arrangement resists adjustment of the length of the adjustment device resulting from the application of axially directed loads to the adjustment device. Such resistance arises, in part, from the gear ratio between the drive gear and the drive member, and the pitch of the worm gear formation.

The drive arrangement conveniently further comprises an electrically operated motor operable to drive the gear, and hence the drive member for rotation. It will be appreciated, however, that the invention is not restricted in this regard and that the drive arrangement may take a range of other forms. By way of example, it could be of hydraulic or pneumatically operated form, or could be of manually adjustable form.

The first adjustment member is preferably releasably connected to the mounting means. According to the invention, the first adjustment member can be secured to the mounting means in a range of angular orientations. By way of example, the first adjustment member may be provided with a plurality of angularly spaced fastener openings, and a threaded fastener associated with the mounting means may cooperate with a selected one of the fastener openings to secure the first adjustment member to the mounting means in a desired angular orientation.

Similarly, the second adjustment member is preferably securable to the housing in a range of angular orientations. By way of example, the second adjustment member and/or the housing may be provided with a plurality of angularly spaced key slots, and a key member may be located within a selected one or ones of the slots to secure the second adjustment member to the housing in a desired angular orientation.

The ability to adjust the angular orientations of the first and second adjustment members relative to the housing is advantageous in that it can be ensured that the adjustment device is assembled in such a fashion as to permit the range of extending and retracting movement thereof to be maximised.

Where used in a vehicle ride height adjustment application, a length adjustment device in accordance with the invention is preferably associated with each damper of a vehicle. In such an arrangement, the length adjustment devices may be independently controlled. Alternatively, a pair of length adjustment devices may be interconnected by a drive shaft connected to a common motor such that both length adjustment devices are adjusted simultaneously. Such an arrangement may permit independent ride height control over the front and rear wheels of a vehicle in a relatively simple and convenient manner.

The invention may be employed in an active ride height control arrangement, for example adjusting the ride height depending upon vehicle speed and/or the nature of the surface over which the vehicle is being driven. If desired, the arrangement could include one or more sensors operable to detect the spacing of parts of a vehicle from the ground and to adjust one or more of the length adjustment devices in response to the detected spacing falling outside of a predetermined range. It will be appreciated that such active ride height control arrangements adjust the vehicle ride height substantially in real time to tune the vehicle suspension to the conditions and/or manner in which the vehicle is being driven, thereby allowing vehicle performance, control and/or safety to be enhanced.

The invention also relates to a vehicle suspension component comprising a damper incorporating or to which has been fitted a length adjustment device of the type set out hereinbefore. By way of example, the second adjustment member of the length adjustment device may form the body of the damper.

The invention will further be described, by way of example, with reference to the accompanying drawings, in which:
Figure 1 is a diagrammatic exploded view illustrating a length adjustment device in accordance with an embodiment of the invention;
Figure 2 is an assembled view illustrating the device of Figure 1;
Figure 3 illustrates the device of Figure 1 incorporated into a damper of a vehicle suspension system;
Figure 4 illustrates the device of Figure 1 in an example in use configuration; and
Figures 5 and 6 illustrate a modification to the device of Figures 1 and 2.

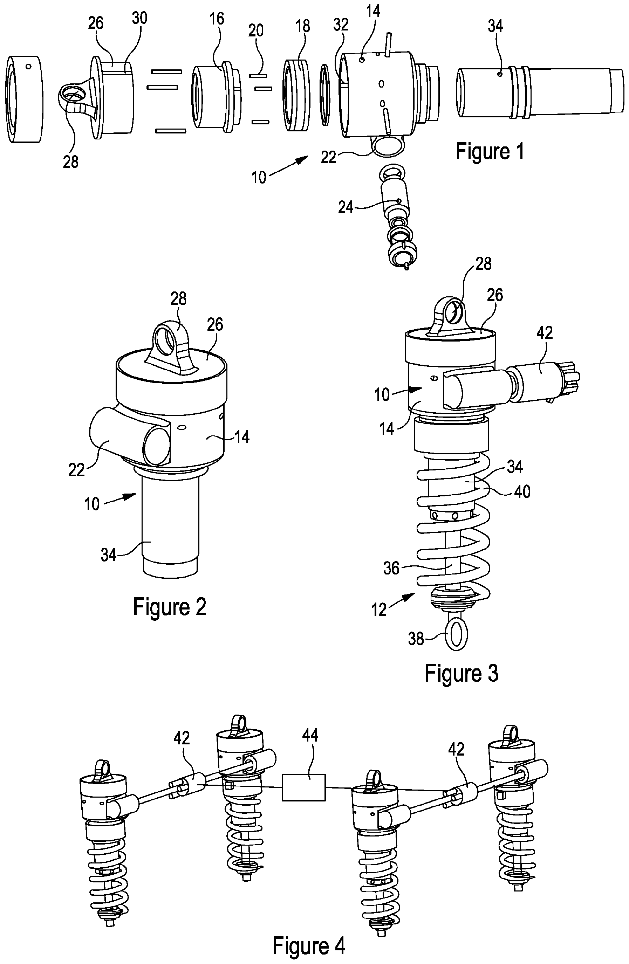

Referring firstly to Figures 1 to 3, a length adjustment device 10 forming part of a damper 12 of a vehicle suspension system is illustrated. Although described herein in relation to a damper 12 of a vehicle suspension system, it will be appreciated that the length adjustment device 10 may be employed in a range of other applications, both in the automotive field and in other technologies. By way of example, it may be used with or form part of an actuator such as used in the aerospace industry to drive component parts for movement, the length adjustment device 10 serving to allow adjustment of a rest length of the actuator.

The length adjustment device 10 comprises a housing 14 that, in this embodiment, is of generally cylindrical form. Located within the housing 14 is a rotatable drive member 16. The drive member 16 is of hollow cylindrical form and includes, on its outer surface, a screw thread formation of a first handedness. The drive member 16 further includes, on its inner surface, a screw thread formation of a second, opposite handedness. By way of example, the external thread formation may be of left handed form, and the internal screw thread formation may be of right handed form. An externally toothed gear 18 is rigidly connected to the drive member 16, for example by drive pins 20. It will be appreciated that other connection techniques may be used and that, if desired, the gear 18 could be formed integrally with the drive member 16.

The drive member 16 is supported in such a fashion that axial movement thereof within the housing 14 is not permitted or is restricted.

The housing 14 is shaped to define a pocket 22 within which a drive gear in the form of a worm gear 24 is supported for rotation, the worm gear 24 cooperating with the teeth of the gear 18 such that rotation of the worm gear 24 drives the gear 18 and drive member 16 for rotation relative to the housing 14. The gear 18 and worm gear 24 together thus form part of a drive arrangement for driving the drive member 16 for rotation.

The length adjustment device 10 further includes a first adjustment member 26 that includes an eye 28 to allow the length adjustment device 10 to be connected to, for example, a vehicle suspension body mounting (not shown). The first adjustment member 26 is provided with external, axially extending ribs 30, and is telescopically fitted within the housing 14 such that the ribs 30 are located within corresponding guide channels 32 formed in the housing 14. The first adjustment member 26 is provided with an internal screw thread which mates with the external thread of the drive member 16. It will be appreciated that the cooperation of the ribs 30 within the guide channels 32 prevents or restricts rotation of the first adjustment member 26 relative to the housing 14. Accordingly, rotation of the drive member 16 causes, by virtue of the threaded engagement between the drive member 16 and the first adjustment member 26, telescoping movement of the first adjustment member 26 relative to the housing 14.

In addition, the length adjustment device 10 further comprises a second adjustment member in the form of a cylindrical damper body 34. The damper body 34 includes an externally threaded region that is in threaded engagement with the internal thread of the drive member 16. The damper body 34 is also held against rotation relative to the housing 14. Accordingly, rotation of the drive member 16 drives the damper body 34 for telescoping movement. For a given direction of rotation of the drive member 16, the first adjustment member 26 and the damper body 34 undertake telescoping movement in opposite directions. Accordingly, depending upon the direction of rotary movement of the drive member 16, the overall length of the length adjustment device 10 will either increase or reduce.

Seal members are provided to restrict the ingress of contaminants into the housing 14.

The damper body 34 defines an internal cylindrical chamber containing a piston which divides the chamber into two sections. The piston is connected to a piston rod 36 that includes a mounting eye 38 on the free end thereof for connection to, for example, a lower suspension wishbone of a vehicle. A spring 40 urges the piston rod 36 for extending movement. The damper is designed in such a way that fluid is able to pass around the piston at a controlled rate, thus the damper serves to control the rate at which the piston and rod 36 are able to move. The operation of the damper 12 is thus largely conventional and will not be described herein in further detail.

In use, with the damper fitted to a vehicle, the weight of the vehicle causes compression of the spring 40, and the design of the damper 12 is preferably such that under normal conditions, the piston is located approximately centrally within the cylindrical chamber. To adjust the ride height of the vehicle, the drive arrangement is operated to cause rotation of the drive member 16. As described above, depending upon the direction of rotation, this causes an increase or decrease in the length of the length adjustment device 10, increasing or decreasing the ride height as required. In conventional ride height adjustment arrangements, adjustment of the ride height adjusts the rest position of the piston within the cylindrical chamber, and so reduces the permitted range of travel of the piston in one or other direction, and so negatively impacts upon the performance of the suspension arrangement. It will be appreciated that, through the use of the invention, adjustment of the ride height does not impact upon the distance through which the piston can travel and so the operation of the suspension system is not negatively impacted through adjustment of the ride height.

As shown in Figure 3, the drive arrangement may include an electrically operated motor 42 operable to drive the worm gear form rotation. However, other techniques may be used to drive the worm gear for rotation. By way of example, manual arrangements are possible, as are hydraulically or pneumatically operated arrangements.

It will be appreciated that the length adjustment device 10 allows adjustment to be undertaken whilst the device 10 is in a load bearing condition, and the gearing of the drive arrangement is selected to permit this. The pitches of the threads are selected such that frictional forces within the length adjustment device 10 are sufficient to hold the device 10 at a selected length when the drive motor 42 is not being operated. Undesirable or uncontrolled changes in the length of the adjustment device 10 are thus avoided, adjustment only occurring as a result of rotation of the worm gear 18 under the control of the motor 42.

Although each length adjustment device 10 may have its own drive motor 42, where used in automotive applications, often it will be desired for the dampers associated with the front wheels to be set at the same ride height as one another, and similarly for the dampers associated with the rear wheels to be set at the same ride height as one another. Accordingly, as shown in Figure 4, the worm gears associated with the length adjustment devices for the front dampers may be connected to one another by a drive shaft driven by a single drive motor, and the worm gears of the length adjustment devices associated with the rear wheels may be similarly interconnected.

In use, a control unit 44 may receive information relating to, for example, the vehicle speed, the terrain over which the vehicle is being driven, or other factors, and may use this information to derive a desired ride height. Appropriate control signals may then be sent to the drive motors 42 to achieve the desired ride height. Ride height adjustment may be undertaken substantially in real time. It will be appreciated that the control unit 44 may use the outputs from sensors used to measure a range of parameters, and that the invention is not restricted to the specific arrangement outlined hereinbefore.

Although the description hereinbefore is of a length adjustment device 10 integrated into a damper 12, it will be appreciated that the length adjustment device 10 may be fabricated as a separate component to be installed between, for example, an end of a damper and the mounting to which the damper would normally be fitted. Furthermore, whilst described in with reference to a specific type of damper, it will be appreciated that the invention is not restricted in this regard and may be used with other types of damper, for example those without a coil spring, or indeed may be used in non-damper related applications as mentioned hereinbefore.

With the arrangement described hereinbefore, in order to ensure that the range of extension and retraction of the device 10 is maximised, it is important to ensure that the screw threads provided on the first and second adjustment members 26, 34, and upon the drive member 16 are properly orientated when the device 10 is assembled, and depending upon the angular orientations of the threads it may not always be possible to achieve a proper orientation whilst having the eye 28, for example, in a desired orientation. If not properly orientated relative to one another, then the first adjustment member 26 may reach the end of its permitted range of extending or retracting movement before the second adjustment member 34 reaches the end of its permitted range of movement, or vice versa, forcing extension or retraction to terminate before the maximum level of extension or retraction of the device 10 has been achieved.

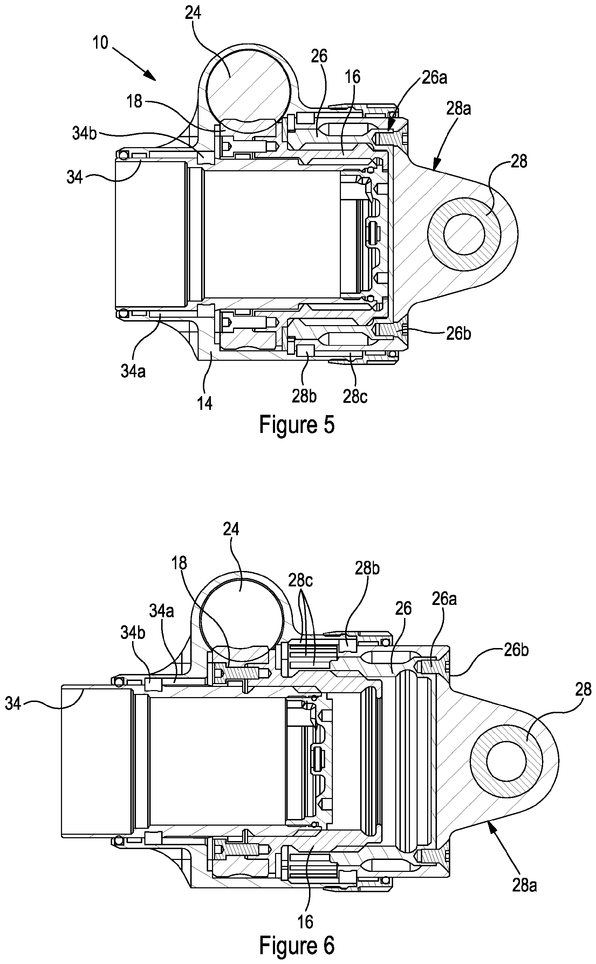

In order to address this, in the embodiment of Figures 5 and 6, the first and second adjustment members 26, 34 are angularly adjustable relative to the housing 14. Specifically, the first adjustment member 26 is formed as a separate component from a mounting component 28a upon which the eye 28 is formed. The mounting component 28a is keyed to the housing 14 by key members 28b slidable within slots 28c formed in the housing 14. The first adjustment member 26 is formed with a large number of angularly spaced fastener openings 26a arranged in a ring, and fasteners 26b in the form of bolts extending through openings provided in the mounting component 28a are received within selected ones of the fastener openings 26a to secure the first adjustment member 26 and mounting component 28a to one another in a desired relative orienation. It will be appreciated that, in this manner, the angular orientation of the first adjustment member 26 relative to the housing 14 may be selected or adjusted.

Similarly, the angular orientation of the second adjustment member 34 relative to the housing 14 is adjustable, in this case by providing the second adjustment member 34 and/or the housing 14 with a large number of angularly spaced key slots 34a, and locating key members 34b within selected aligned key slots 34a to secure the second adjustment member 34a to the housing 14 in a selected angular orientation.

During assembly, the first and second adjustment members 28, 34 and the drive member 16 can be introduced into the housing 14 with the second adjustment member 34 in a desired angular orientation relative to the housing 14, and adjusted relative to one another to ensure that the first and second adjustment members 28, 34 both reach their fully retracted conditions at substantially the same time. The mounting member 28a may then be fitted to the housing 14 and secured to the first adjustment member 28 in a desired angular orientation. In this manner, it can be ensured that the device 10 can be assembled in such a manner as to allow optimal adjustment of the length thereof, with Figure 5 showing the device 10 in its fully retracted position and Figure 6 illustrating the device 10 in its fully extended position.

Whilst specific embodiments of the invention have been described hereinbefore with reference to the accompanying drawings, it will be appreciated that a wide range of modifications and alterations may be made thereto without departing from the scope of the invention as defined by the appended claims.

## Claims

1. A length adjustment device (10) comprising a drive member (16) provided with an external thread formation of one handedness and with an internal thread formation of an opposite handedness, a first adjustment member (26) including an internally threaded region in threaded engagement with the external thread formation of the drive member (16), and a second adjustment member (34) including an externally threaded region in threaded engagement with the internal thread formation of the drive member (16), the first and second adjustment members (26, 34) being supported against rotation relative to one another, and a drive arrangement whereby the drive member (16) can be driven for rotation; **characterised in that** the device (10) further comprises a housing (14) within which the drive member (16) is located and supported for rotation; wherein the first adjustment member (26) is adjustably secured to a mounting member (28a), such that the first adjustment member (26) is securable to the mounting member (28a) in a desired angular orientation; and wherein the mounting member (28a) is fitted to the housing (14), to allow angular adjustment of the first adjustment member (26) relative to the housing (14).

2. A device (10) according to Claim 1, and further comprising a drive gear (24) arranged to cooperate with a thread formation provided on the drive member (16); and, optionally wherein the drive gear (24) is rotatable about an axis substantially perpendicular to the axis of rotation of the drive member (16).

3. A device (10) according to Claim 2, wherein the drive gear (24) takes the form of a worm gear.

4. A device (10) according to any of the preceding claims, wherein the first adjustment member (26) incorporates mounting means (28) to allow it to be connected to another device.

5. A device (10) according to any of the preceding claims, wherein the second adjustment member (34) forms part of a damper or actuator housing; and, optionally, wherein the second adjustment member (34) comprises a damper body.

6. A device (10) according to any of the preceding claims, wherein the external thread formation is constituted by an external thread, and wherein the internal thread formation is constituted by an internal thread.

7. A device (10) according to any of the preceding claims, and employed in an active ride height control arrangement, adjusting the ride height depending upon vehicle speed and/or the nature of the surface over which the vehicle is being driven.

8. A device (10) according to any of the preceding claims, wherein the second adjustment member (34) is keyed or otherwise connected to the housing (14) to avoid or restrict relative rotation therebetween, and, optionally wherein the second adjustment member (34) is permitted to be keyed to the housing (14) in a range of angular orientations.

9. A device (10) according to any of the preceding claims, wherein the drive arrangement comprises an electrically operated motor (42) connected via a gear arrangement to the drive member (16) to drive the drive member (16) for rotation.

10. A device (10) according to any one of claims 1 to 8, wherein the drive arrangement is of hydraulic or pneumatically operated form, or of manually adjustable form.

11. A device (10) according to any of the preceding claims, wherein a pair of length adjustment devices (10) are interconnected by a drive shaft connected to a common motor (42) such that both length adjustment devices (10) are adjusted simultaneously.

12. A vehicle suspension component comprising a damper (12) incorporating or to which has been fitted a length adjustment device (10) as claimed in any of the preceding claims.

## Patentansprüche

1. Längenanpassungsvorrichtung (10), umfassend ein Antriebselement (16), das mit einer Außengewindestruktur einer Steigungsrichtung und mit einer Innengewindestruktur einer entgegengesetzten Steigungsrichtung versehen ist, ein erstes Anpassungselement (26), das einen Innengewindebereich in Gewindeeingriff mit der Außengewindestruktur des Antriebselements (16) enthält, und ein zweites Anpassungselement (34), das einen Außengewindebereich in Gewindeeingriff mit der Innengewindestruktur des Antriebselements (16) enthält, wobei das erste und das zweite Anpassungselement (26, 34) gegen Drehung relativ zueinander gelagert sind, und eine Antriebsanordnung, wodurch das Antriebselement (16) zur Drehung angetrieben werden kann; **dadurch gekennzeichnet, dass** die Vorrichtung (10) ferner ein Gehäuse (14) umfasst, in dem sich das Antriebselement (16) befindet und zur Drehung gelagert ist; wobei das erste Anpassungselement (26) anpassbar an einem Montageelement (28a) befestigt ist, so dass das erste Anpassungselement (26) in einer gewünschten Winkelausrichtung an dem Montageelement (28a) befestigbar ist; und wobei das Montageelement (28a) an dem Gehäuse (14) angebracht ist, um eine Winkelanpassung des ersten Anpassungselements (26) relativ zu dem Gehäuse (14) zu ermöglichen.

2. Vorrichtung (10) nach Anspruch 1 und ferner ein Antriebszahnrad (24) umfassend, das so angeordnet ist, dass es mit einer an dem Antriebselement (16) bereitgestellten Gewindestruktur zusammenwirkt; und optional wobei das Antriebszahnrad (24) um eine Achse drehbar ist, die im Wesentlichen senkrecht zu der Drehachse des Antriebselements (16) verläuft.

3. Vorrichtung (10) nach Anspruch 2, wobei das Antriebszahnrad (24) die Form eines Schneckenzahnrads hat.

4. Vorrichtung (10) nach einem der vorhergehenden Ansprüche, wobei das erste Anpassungselement (26) Montagemittel (28) enthält, die es ermöglichen, dass es mit einer anderen Vorrichtung verbunden wird.

5. Vorrichtung (10) nach einem der vorhergehenden Ansprüche, wobei das zweite Anpassungselement (34) Teil eines Dämpfer- oder Aktuatorgehäuses ist; und optional, wobei das zweite Anpassungselement (34) einen Dämpferkörper umfasst.

6. Vorrichtung (10) nach einem der vorhergehenden Ansprüche, wobei die Außengewindestruktur durch ein Außengewinde gebildet ist und wobei die Innengewindestruktur durch ein Innengewinde gebildet ist.

7. Vorrichtung (10) nach einem der vorhergehenden Ansprüche und in einer aktiven Bodenabstandssteuerungsanordnung eingesetzt, die den Bodenabstand abhängig von der Fahrzeuggeschwindigkeit und/oder der Beschaffenheit der Oberfläche, über die das Fahrzeug gefahren wird, anpasst.

8. Vorrichtung (10) nach einem der vorhergehenden Ansprüche, wobei das zweite Anpassungselement (34) mit dem Gehäuse (14) verkeilt oder auf andere Weise verbunden ist, um eine relative Drehung dazwischen zu vermeiden oder einzuschränken, und optional, wobei zugelassen ist, dass das zweite Anpassungselement (34) mit dem Gehäuse (14) in einer Auswahl von Winkelausrichtungen verkeilt wird.

9. Vorrichtung (10) nach einem der vorhergehenden Ansprüche, wobei die Antriebsanordnung einen elektrisch betriebenen Motor (42) umfasst, der über eine Zahnradanordnung mit dem Antriebselement (16) verbunden ist, um das Antriebselement (16) zur Drehung anzutreiben.

10. Vorrichtung (10) nach einem der Ansprüche 1 bis 8, wobei die Antriebsanordnung vom hydraulisch oder pneumatisch betriebenen Typ oder vom manuell anpassbaren Typ ist.

11. Vorrichtung (10) nach einem der vorhergehenden Ansprüche, wobei ein Paar Längenanpassungsvorrichtungen (10) durch eine Antriebswelle miteinander verbunden sind, die mit einem gemeinsamen Motor (42) verbunden ist, so dass beide Längenanpassungsvorrichtungen (10) gleichzeitig angepasst werden.

12. Fahrzeugfederungskomponente, umfassend einen Dämpfer (12), der eine Längenanpassungsvorrichtung (10) nach einem der vorhergehenden Ansprüche enthält oder an dem diese angebracht ist.

## Revendications

1. Dispositif de réglage de longueur (10) comprenant un élément d'entraînement (16) pourvu d'une formation de filetage externe dans un premier sens de rotation et d'une formation de filetage interne dans un sens de rotation opposé, un premier élément de réglage (26) comprenant une région filetée intérieurement en prise filetée avec la formation de filetage externe de l'élément d'entraînement (16), et un second élément de réglage (34) comprenant une région filetée extérieurement en prise filetée avec la formation de filetage interne de l'élément d'entraînement (16), les premier et second éléments de réglage (26, 34) étant supportés contre la rotation l'un par rapport à l'autre, et un agencement d'entraînement par lequel l'élément d'entraînement (16) peut être entraîné en rotation ;
**caractérisé en ce que** le dispositif (10) comprend en outre un boîtier (14) à l'intérieur duquel l'élément d'entraînement (16) est situé et supporté pour rotation ; dans lequel le premier élément de réglage (26) est fixé de manière réglable à un élément de montage (28a), de sorte que le premier élément de réglage (26) puisse être fixé à l'élément de montage (28a) dans une orientation angulaire souhaitée ; et dans lequel l'élément de montage (28a) est monté sur le boîtier (14), pour permettre un réglage angulaire du premier élément de réglage (26) par rapport au boîtier (14).

2. Dispositif (10) selon la revendication 1, et comprenant en outre un engrenage d'entraînement (24) agencé pour coopérer avec une formation de filetage prévue sur l'élément d'entraînement (16) ; et, facultativement, dans lequel l'engrenage d'entraînement (24) peut tourner autour d'un axe sensiblement perpendiculaire à l'axe de rotation de l'élément d'entraînement (16).

3. Dispositif (10) selon la revendication 2, dans lequel l'engrenage d'entraînement (24) prend la forme d'un engrenage à vis sans fin.

4. Dispositif (10) selon l'une quelconque des revendications précédentes, dans lequel le premier élément de réglage (26) incorpore des moyens de montage (28) pour lui permettre d'être connecté à un autre dispositif.

5. Dispositif (10) selon l'une quelconque des revendications précédentes, dans lequel le second élément de réglage (34) fait partie d'un boîtier d'amortisseur ou d'actionneur ; et, facultativement, dans lequel le second élément de réglage (34) comprend un corps d'amortisseur.

6. Dispositif (10) selon l'une quelconque des revendications précédentes, dans lequel la formation de filetage externe est constituée par un filetage externe, et dans lequel la formation de filetage interne est constituée par un filetage interne.

7. Dispositif (10) selon l'une quelconque des revendications précédentes, et utilisé dans un agencement de commande de hauteur de caisse active, ajustant la hauteur de caisse en fonction de la vitesse du véhicule et/ou de la nature de la surface sur laquelle le véhicule roule.

8. Dispositif (10) selon l'une quelconque des revendications précédentes, dans lequel le second élément de réglage (34) est claveté ou relié d'une autre manière au boîtier (14) pour éviter ou limiter la rotation relative entre eux, et, facultativement, dans lequel le second élément de réglage (34) peut être claveté sur le boîtier (14) dans une plage d'orientations angulaires.

9. Dispositif (10) selon l'une quelconque des revendications précédentes, dans lequel l'agencement d'entraînement comprend un moteur électrique (42) connecté via un agencement d'engrenage à l'élément d'entraînement (16) pour entraîner l'élément d'entraînement (16) en rotation.

10. Dispositif (10) selon l'une quelconque des revendications 1 à 8, dans lequel le dispositif d'entraînement est de type hydraulique ou pneumatique, ou de type réglable manuellement.

11. Dispositif (10) selon l'une quelconque des revendications précédentes, dans lequel une paire de dispositifs de réglage de longueur (10) sont interconnectés par un arbre d'entraînement connecté à un moteur commun (42) de sorte que les deux dispositifs de réglage de longueur (10) soient réglés simultanément.

12. Composant de suspension de véhicule comprenant un amortisseur (12) incorporant ou sur lequel a été ajusté un dispositif de réglage de longueur (10) selon l'une quelconque des revendications précédentes.
